# EUROPEAN PATENT APPLICATION

(11) **EP 4 848 216 A1**
(43) Date of publication of application: **02.12.2026**
(21) Application number: 26179412.7
(22) Date of filing: 19.05.2026
(51) Int. Cl.: G06T 12/10

(54) **METHOD AND SYSTEM FOR SIMULATION-BASED POLYNOMIAL CORRECTION OF X-RAY CT DATA**

(30) Priority: 28.05.2025 US 202519220395
(71) Applicant: Carl Zeiss X-Ray Microscopy, Inc., Dublin, California 94568 (US)
(72) Inventor: ANDREW, Matthew, Dublin, CA, 94568 (US)
(74) Representative: Gulde & Partner

(57) **Abstract**

A method and system for simulation-based polynomial correction of X-ray computed tomography (CT) data addresses beam-hardening artifacts that arise from using polychromatic X-ray sources in laboratory computed tomography (CT). The polychromatic beam leads to varying effective attenuation coefficients with depth, causing cupping or other artifacts in reconstructed volumes. The disclosed approach employs a simulator that models the system spectral response-encompassing source spectrum, filters, and detector characteristics. These simulated polychromatic values are then mapped to corresponding monochromatic absorption values, fitting a polynomial or higher-order function that serves as a "beam-hardening correction" curve. By applying this correction function to actual projection data prior to reconstruction, the method aligns measured intensities to a consistent, target energy regime. Consequently, the reconstructed 2D or 3D images exhibit reduced beam-hardening artifacts, enabling accurate quantitative analysis and material identification.

## Description

### TECHNOLOGICAL BACKGROUND

Laboratory X-ray devices typically use polychromatic X-ray sources. As such, the transmission values as measured by these devices represent an aggregate of characteristic lines and Bremsstrahlung radiation.

The variants of back projection algorithms used in X-ray imaging to reconstruct slice data from projections rely at their heart on the assumption that the values used for back projections are linearly related to the thickness of the material.

X-ray transmission is related to thickness by the Beer-Lambert law: $T = \frac{I}{{I}_{0}} = {e}^{- μl}$ [1] were the transmission (T), or normalized intensity (I/I₀) is exponentially related to the attenuation coefficient of the material (µ) and its thickness 1. This can therefore be linearized to represent a value called "absorption" (A) by taking the negative log of measured data: $A = - log \left(T\right) = μl$ [2] This value linearly relates measured data to object thickness, with the constant of proportionality being the attenuation coefficient.

Such projections can be efficiently reconstructed using well known reconstruction algorithms (e.g. Feldkamp-Davis-Kress reconstruction), and if care is taken during data scaling and back projection, the reconstructed (volume domain) intensities represent the attenuation coefficients of the regions in the volume.

Note that while the above equations explicitly deal with a single energy it can be thought of as a sum across energies for an energy dependent system. $T = \frac{{\sum }_{e} {I}_{e}}{{\sum }_{e} {I}_{0 e}} = \frac{{\sum }_{e} {I}_{0 e} {e}^{- {μ}_{e} l}}{{\sum }_{e} {I}_{0 e}}$ [3] where I₀ₑ and µₑ are the normalized energy dependent measured intensities and attenuation coefficients respectively.

Because for all materials, µ is a strong function of e, and polychromatic X-ray sources are used in laboratory systems, a simple negative log, as shown in the above equation 2 (used for reconstruction) gives rise to artifacts. Across multiple object thicknesses there is no uniform constant of proportionality relating the measurement A to thickness - this coefficient is a function of thickness itself, and therefore variable across the image.

Generally, materials have higher attenuation coefficients to low energy X-rays and lower attenuation coefficients to higher energy X-rays. As X-rays propagate through a material lower energy photons are preferentially attenuated relative to higher energy photons, leading to a progressive increase in the mean X-ray photon energy and thereby a progressive decrease in effective attenuation coefficient. After reconstruction this can lead to many artifacts, commonly called "beam hardening" artifacts, including cupping artifacts. Voxels around the edge of the object are reconstructed with views that propagate through only the edge of the material, have short thicknesses, low mean energies, and higher effective attenuation coefficients. Voxels in the middle have longer thicknesses, higher mean energies, and lower effective attenuation coefficients.

These artifacts are commonly corrected for by "linearizing" the measured attenuation (or transmission) images to create a corrected A' (or T'). $A ′ = f \left(A\right) = f \left(μ\left(e\right)l\right) ∼ μl$ [4]

A correction function can be defined where the measured absorption values are a non-linear function of object thickness. A polynomial is an example simple function. $A ′ ∼ μl = a + bA + {cA}^{2} + {dA}^{3} + {eA}^{4} + ⋯ + {nA}^{n}$ [5]

In the previous patent application entitled "Method and system for analytical X-ray calibration, reconstruction and indexing using simulation", by Matthew Andrew, U.S. Pat. Appl Pub. No.: US 2023/0143112 A1, a workflow is proposed in which polychromatic beam-hardening effects are mitigated through the use of simulation-driven, analytical calibration and reconstruction steps in a computer tomography (CT) system. The user or system identifies materials of known composition (and therefore known attenuation properties) present within the field of view and leverages polychromatic X-ray simulations to generate an expected transmission or attenuation value for each of those known materials. By integrating this information directly into the reconstruction pipeline, the workflow can account for the varying spectral response of the X-ray source and detector (i.e., the effective polychromatic spectra) and correct each measured projection accordingly.

Specifically, the method includes simulating X-ray propagation through sample geometries and detector responses, using tabulated attenuation coefficients across the relevant energy spectrum. This simulation yields an effective relationship between measured grayscale values and actual material attenuation coefficients, effectively "indexing" reconstructed intensities to physical compositional parameters. Once this relationship is established, beam-hardening artifacts are minimized, and the resulting 3D datasets can be segmented or analyzed to identify constituent phases (e.g., various minerals in geological samples) with increased confidence and accuracy.

In implementations, Eq. (5) is simplified such that the correction function is a function of a single coefficient a. $A ′ = A + {aA}^{2} - a {\left(cAbs\right)}^{2}$ [6]

Where cAbs is some constant absorption value (the absorption value kept constant at this function). Practically. cAbs can be kept constant (e.g. ~0.6 corresponding to a constant transmission of 25%). A series of trial reconstructions can be performed on a subset of the data at a range of different coefficients (values of a) and the user can then assess the results to find the best reconstructions by those that visually display the lowest artifacts. This coefficient can then be used to correct the complete dataset. This can give good results practically on a single dataset, but because the correction function is determined heuristically (by visual assessment) the corrected absorption coefficients (µ) do not correspond to a known energy, so the reconstructed intensities cannot be analyzed quantitatively. Furthermore, if the sample contains multiple materials, or a wide array of measured absorption values, the simple correction given in Eq. [6] may not be high enough accuracy. As it is optimized to the dataset being examined, the correction function will give values that minimize the degree of artifacts, not ensuring reconstructed intensities are consistent between scanning situations, resolutions, sample geometry or aggregate sample composition.

### GENERAL SUMMARY

These previous approaches present a range of problems, both practical and theoretical. Theoretically a large (practically infinite) number of correction functions can be imagined, as there are a large (practically infinite) number of attenuation coefficients that the data could be corrected to. The only constraint is that the reconstructed value should be linearly proportional to thickness. Consequently, there is no constraint on the constant of linear proportionality. For example, in the above equation (4), µ must be constant for all A, but good reconstructions can be found for all constants. Physically, this can be interpreted as correcting the data to different effective energies, as the proportionality constant (µ, the attenuation coefficient) is a strong function of energy.

In addition, for a given energy (desired set of target constant attenuation coefficients), the correct function cannot be unambiguously determined for multicomponent systems, as different chemical components have different spectral signatures, leading to differing functional relationship between polychromatic and any energy-specific monochromatic attenuation values. For any target energy and chemical component distribution there is likely only a single combination of coefficients that corrects the measured absorption values A to corrected absorption values A' (with a constant attenuation coefficient as a function of thickness) such that the constant of proportionality corresponds to the attenuation coefficients at a (desired) target energy to a maximal degree of accuracy.

The present disclosure concerning the integrated use of an accurate system simulator is employed for a range of views of varying sample thicknesses and compositions.

This approach can address the challenge of quantitatively reconstructing polychromatic X-ray projection data by introducing a workflow that corrects beam-hardening artifacts. In one implementation, the process begins with acquiring projection data from a polychromatic X-ray source as it passes through a sample. Because this source typically emits X-ray photons over a broad spectrum, the raw projections inherently capture energy-dependent attenuation effects.

In an embodiment, the system may - beforehand, simultaneously or thereafter - determine a system spectral response by accounting for the X-ray source spectrum, filter absorption, and a detector response function. More concretely, this preferably involves determining a system spectral response implicitly including identifying how the source's emission profile is shaped, e.g., by including filters, how the detector (often involving a scintillator) absorbs photons at different energies, and how that absorption translates into a measurable signal. Source spectra can be either measured or simulated.

Simulation(s) is/are performed for a plurality of polychromatic absorption values for a range of paths of varying sample thicknesses and/or compositions, under the aforementioned system spectral response. In other words, the system models how X-rays of different energies would be absorbed by certain materials of known (or estimated) composition and thickness, producing a family of "polychromatic" absorption values that reflect real-world beam-hardening phenomena. Sample thickness can be measured from sample imaging (i.e. from the X-ray data, or visible light data), can be assumed based on system configuration, or can be entered as prior information manually by a user. Sample composition can be entered as prior information by the user or estimated based on single or multi-energy imaging of the sample.

For each of these simulated polychromatic absorption values, corresponding monochromatic absorption values are computed or obtained from tabulated values at a chosen target energy. This step defines what each simulated path's absorption would look like if the beam were truly monochromatic-enabling a benchmark for how the idealized attenuation should appear without multi-energy distortion.

Using these pairings of simulated polychromatic and monochromatic absorption values, a mapping function-generally a polynomial or another higher-order formulation-is fitted that effectively "translates" measured polychromatic data into its monochromatic equivalent. The polynomial's coefficients (or comparable parameters) can be tuned so that, across the breadth of simulated thicknesses and compositions, the corrected values track closely to the idealized monochromatic ones.

In practice, once the polynomial (or other function) has been established, it is applied to each measured projection's initial absorption value, converting it into a corrected absorption value that is substantially linear with respect to thickness at the target energy. This allows the method to overcome the thickness-dependent variation in effective attenuation that typically plagues polychromatic imaging. On the other hand, it is also possible to derive a view-dependent function in the case of an anisotropic sample.

Finally, these corrected absorption values are fed into a standard tomographic reconstruction algorithm. As a result, the system reconstructs a volumetric dataset in which each voxel's intensity correlates more directly to an actual attenuation coefficient, facilitating material identification or quantification. Because beam-hardening distortions are minimized, scientists or engineers can segment the data more reliably and map the reconstructed intensities to reference attenuation coefficients for known materials, thus achieving a quantitative analysis of the sample's internal structure.

Otherwise put; a method for correcting polychromatic X-ray projection data of the X-ray imaging system to enable quantitative volume reconstruction of the sample is provided. The method essentially involves correcting the depth dependence of the absorption properties of X-rays as they pass through the sample back towards a linear dependence on sample thickness for a given beam energy, i.e., so that the Beer-Lambert law essentially holds throughout the whole depth of the sample. The method thus offers advantages in allowing for a more accurate quantitative reconstruction of a sample that is not heavily dependent on parameters such as sample thickness, elemental composition and/or beam energy.

In an embodiment, the method includes the steps of: acquiring projection data from a polychromatic X-ray passing through the sample; determining a system spectral response based on an X-ray source spectrum, filter absorption parameters, and a detector response function; simulating a plurality of polychromatic absorption values for different material thicknesses and/or compositions under the determined system spectral response; computing corresponding monochromatic absorption values at a target energy for plurality of thicknesses and/or compositions; fitting a mapping function that relates polychromatic absorption values to the corresponding monochromatic absorption values, wherein said mapping function is a polynomial or other higher-order function; applying the mapping function to the initial absorption value A to produce a corrected absorption value A' that is substantially linear with respect to thickness for the target energy; and reconstructing a volumetric dataset from the corrected absorption values to obtain attenuation coefficients that enable material identification or quantification.

In certain embodiments, determining the system spectral response comprises performing a simulation that models at least one of (i) X-ray source output over the relevant energy range, (ii) filter material attenuation, and/or (iii) scintillator absorption. In these implementations, the individual energy-dependent effects-such as the probability of photon interaction in the scintillator and the attenuation imposed by a selectable filter-are combined into a single, integrated detection probability distribution. By simulating multiple energy bins and summing their respective weights, the system arrives at a comprehensive spectral response that accurately captures how photons at each energy level are produced, altered, and finally detected. In other words, whichever of the above-mentioned aspects (i)-(iii) has been modeled, they can be used, e.g., combined together if more than one has been modelled, to produce an energy-dependent detection probability for generating the system spectral response. This has the advantageous technical effect of obtaining an accurate and system-relevant spectral response for further feeding a more accurate reconstruction methodology that may avoid problems such as cupping artifacts, i.e., misinterpreting the center of objects as being more dense, streaking/dark bands between dense regions and/or quantification errors.

When fitting the mapping function, some embodiments employ polynomial regression of at least second order. Here, polynomial coefficients can be systematically optimized by minimizing an error metric (such as least squares) between simulated polychromatic absorption values and the corresponding monochromatic absorption values. This ensures that the function properly compensates for a range of beam-hardening scenarios, from thin sample edges to thicker central regions, while maintaining an effective linear relationship at the chosen target energy.

In an embodiment, simulating a plurality of polychromatic absorption values can involve generating sets of sample thicknesses and material compositions that match an estimated probability distribution of real-world sample geometries. For example, if a user anticipates a cylindrical core sample with certain mineral phases, the method can generate synthetic paths of various thicknesses and phase proportions reflecting the likely distribution of those phases within the specimen. By covering a broad statistical space of geometries, the resulting correction function is robust to diverse imaging conditions.

In further embodiments, computing corresponding monochromatic absorption values leverages tabulated attenuation coefficients for each constituent material at the target energy. These coefficients are accumulated or "summed" over a specified path length through the sample to generate monochromatic absorption values to provide a normalized weighted average. Such tabulated data may be drawn from published references or proprietary databases, advantageously enabling precise calculations of how a truly monochromatic beam would interact with any given phase.

After polynomial correction is applied, reconstructing the volumetric dataset can be accomplished using filtered back-projection (FBP) or Feldkamp-Davis-Kress (FDK) algorithms. In an embodiment, the nominal transmission is preferably converted into an effective reconstructed greyscale value by scaling to give an effective linear attenuation coefficient. Scaling by a beam hardening correction routine is preferably used. Because the corrected absorption values are substantially linear with respect to thickness, these standard reconstruction techniques yield a resulting final volumetric array in which each voxel intensity corresponds substantially to a true material attenuation coefficient at the specified energy, i.e., the voxel intensity encodes in some manner, or is based at least partially on, the true material attenuation coefficient at the specified energy. This outcome is essential for quantitative analyses such as phase segmentation or density estimation.

Moreover, some implementations include storing the polynomial or higher-order mapping function, e.g., other non-linear function such as an exponential, logarithmic, trigonometric, rational, radical or absolute-value function, for future use in subsequent scans. By saving the function, operators, i.e., users, can rapidly reapply the same correction whenever the system operates at substantially similar conditions-such as the same source voltage or filter configurations-and thereby streamline routine scanning workflows.

Finally, certain embodiments allow for updating the mapping function whenever one or more parameters in the spectral response change. For instance, if the operator installs a new filter or modifies the X-ray source voltage, the system can re-run the simulations under the revised operating conditions. It then refits the polynomial or higher-order function or other non-linear function to an updated set of polychromatic absorption values. If the operator does not install a new filter or modify the X-ray source voltage, the system does not need to re-run the simulations. In this way, the method ensures that the correction remains accurate and robust, even across different scanning setups or evolving hardware configurations.

The above and other features including various novel details of construction and combinations of parts, and other advantages, will now be more particularly described with reference to the accompanying drawings and pointed out in the claims. It will be understood that the particular method and device embodying the disclosure are shown by way of illustration and not as a limitation. The principles and features may be employed in various and numerous embodiments without departing from the scope.

### BRIEF DESCRIPTION OF THE DRAWINGS

In the accompanying drawings, reference characters refer to the same parts throughout the different views. The drawings are not necessarily to scale; emphasis has instead been placed upon illustrating the principles. Of the drawings:
Fig. 1 is a schematic diagram of an X-ray microscopy (XRM) computer tomography (CT) system according to an embodiment of the present disclosure.
Fig. 2 is a flow diagram illustrating a simulation-based polynomial correction method for addressing polychromatic beam-hardening artifacts and enabling the derivation of an effective monochromatic attenuation coefficient, according to an embodiment of the present disclosure.
Fig. 3 is a flow diagram illustrating how the polynomial correction function from the simulation-based workflow is applied by the computer subsystem to real projection data, ultimately enabling material identification through accurate attenuation mapping, according to an embodiment of the present disclosure.
Fig. 4 shows a simulation and fitting for higher order functions that fit specifically to the system conditions, according to an embodiment of the present disclosure.
Figs. 5A and 6A are slices generated using simple beam hardening correction. Figs. 5B and 6B show the automated beam hardening correction, using a higher order polynomial, according to an embodiment of the present disclosure.
Figs 7A and 7B are histograms comparing the attenuation coefficients for candidate material compositions and densities at the target energy with the observed reconstructed intensity distributions in the data, according to an embodiment of the present disclosure.
Fig. 8 is a plot of frequency versus universally corrected linear attenuation for two samples with different compositions reconstructing to the same absolute mineral intensities when using higher order polynomial correction functions, according to an embodiment of the present disclosure..

### DETAILED DESCRIPTION OF THE DRAWINGS

The disclosure now will be described more fully hereinafter with reference to the accompanying drawings, in which illustrative embodiments are shown. This may, however, be embodied in many different forms and should not be construed as limited to the embodiments set forth herein; rather, these embodiments are provided so that this disclosure will be thorough and complete, and will fully convey the scope to those skilled in the art.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

It will be understood that although terms such as "first" and "second" are used herein to describe various elements, these elements should not be limited by these terms. These terms are only used to distinguish one element from another element. Thus, an element discussed below could be termed a second element, and similarly, a second element may be termed a first element without departing from the teachings.

Unless otherwise defined, all terms (including technical and scientific terms) used herein have the same meaning as commonly understood by one of ordinary skill in the. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

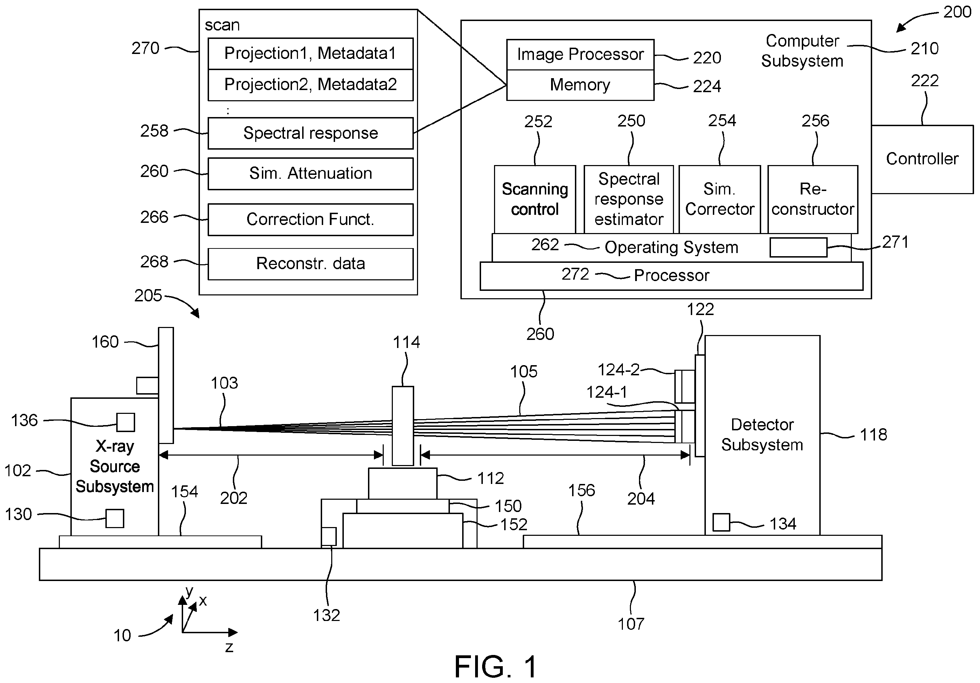

Fig. 1 is a schematic diagram of an X-ray microscopy (XRM) system 200 according to an embodiment.

The XRM system 200 generally includes an X-ray microscope 205 and a computer or a computer subsystem 210.

The illustrated X-ray microscope 205 is an X-ray CT system appropriate for laboratory operation. An X-ray source subsystem 102 generates a polychromatic X-ray beam 103. An object stage subsystem 110 with object holder 112 holds a sample or object of interest 114 in the beam 103, 105 and positions and repositions it to enable scanning of the object of interest 114 in the stationary beam 103, 105 thereby enabling computer tomography. A detector subsystem 118 detects the beam 105 after it has been modulated by the object of interest 114. A base, such as a platform or optics table 107, provides a stable foundation for the microscopy system 200 and its subsystems.

In an embodiment, the object stage subsystem 110 will typically include compound linear and rotation stages. The illustrated example has a precision 3-axis compound stage 150 that translates and positions the object of interest 114 along the coordinate system 10, i.e., the x, y, and z axes, very precisely but only over relatively small ranges of travel. This allows a region of interest of the object 114 to be located within the beam 103/105. The 3-axis compound stage 150 is mounted on a theta stage 152 that rotates the 3-axis compound stage 150 and thus object of interest 114 in the beam around the y-axis. The theta stage 152 is in turn mounted on the base 107.

The source subsystem 102 will typically be a "laboratory X-ray source" or other polychromatic source of X-rays as distinguished from synchrotron sources that can generate collimated and monochromatic X-ray beams.

As used herein, a "laboratory X-ray source" is any suitable source of X-rays that is not a synchrotron X-ray radiation source. Laboratory X-ray source 102 can be an X-ray tube, in which electrons are accelerated in a vacuum by an electric field and shot into a target piece of metal, with X-rays being emitted as the electrons decelerate in the metal. Typically, such sources produce a continuous spectrum of background X-rays combined with sharp peaks in intensity at certain energies that derive from the characteristic lines of the selected target, depending on the type of metal target used.

In one example, source subsystem 102 is a rotating anode type or microfocused source, with a tungsten target. Targets that include molybdenum, gold, platinum, silver or copper also can be employed. Preferably a transmission target configuration is used in which the electron beam strikes the thin target from its backside. The X-rays emitted from the other side of the target are used as the beam 103.

The X-ray beam 103 generated by source subsystem 102 is often conditioned to suppress unwanted energies or wavelengths of radiation. For example, undesired wavelengths present in the beam 103 are eliminated or attenuated, using, for instance, energy filters (designed to select a desired X-ray energy range (bandwidth)) held in a filter wheel 160. These energy filters typically include an 'air' filter corresponding to no filter along with a set of low energy filters for filtering lower energy X-rays and high energy filters for filtering higher energy X-rays.

Preferably, in many aspects, high pass filters are used to block lower energy X-rays as these lower energies cause beam hardening by not penetrating as deep into the sample.

When the object 114 is exposed to the X-ray beam 103, the X-ray photons, which propagate through the object of interest 114, form a modulated beam 105 that is received by the detector subsystem 118.

Typically, a magnified projection image of the object 114 is formed on the detector subsystem 118. The magnification of the X-ray stage is equal to the inverse ratio of the source-to-object distance 202 and the source-to-detector distance 204.

To achieve high resolution, an embodiment of the X-ray CT system 200 further utilizes a very high resolution, two stage, detector 124-1 of the detector subsystem 118; optionally in conjunction with positioning the object of interest 114 close to the X-ray source system 102. The high-resolution detector 124-1 includes a scintillator in conjunction with a microscope objective and tube lens to provide additional optical magnification in a range between 2x (twofold) and 100x (hundredfold), or more, in addition to X-ray magnification. The scintillator converts the X-rays into an optical image that is further magnified in that can be detected by a camera. One example is described in U.S. Pat. No. 7,297,959.

Other detectors are often included as part of the detector subsystem 118. For example, the detector subsystem 118 can include a lower resolution detector 124-2. This could be a flat panel detector possibly in combination with a scintillator and camera or a detector with a lower magnification microscope objective, in examples. Still other examples include direct conversion detectors such as those described in U.S. Pat. No. 12,130,392 by Xu, et al. or International Publ. No. WO 2023/133491 by Brenner, et al. Configurations of one, two, or even more detectors 124 of the detector subsystem 118 are possible in various embodiments.

Preferably, two or more detectors 124-1, 124-2 are mounted on a turret 122 of the detector subsystem 118, so that they can be alternately rotated into the path of the modulated beam 105 from the object of interest 114.

Typically, the source subsystem 102 and the detector subsystem 118 are mounted on respective z-axis stages. For example, in the illustrated example, the source subsystem 102 is mounted to the base 107 via a source stage 154, and the detector subsystem 118 is mounted to the base 107 via a detector stage 156. In practice, the source stage 154 and the detector stage 156 are lower precision, high travel-range stages that allow the source subsystem 102 and the detector subsystem 118 to be moved into position, often very close to the object 114 during scanning and then be retracted to allow the object 114 to be removed from, a new object to be loaded onto, and/or the object to be repositioned on the object holder 112 of the object stage subsystem 110.

In an embodiment, the operation of the microscopy system 200 and the scanning of the object 114 is controlled by the computer subsystem 210 that preferably includes a one or more processors 272, one or more image processors (e.g., graphics processing units) 220, one or more controllers 222, and memory 224.

In an embodiment, the computer subsystem 210 also includes data storage resources such as disc or solid-state drives, and a dynamic memory 271. The processors 272 execute an operating system 262 and various applications run on that operating system 262 to allow for user control and operation of the microscopy system 200.

In an implementation, the controller 222 is configured to allow the computer 210 to control and manage components in the X-ray CT microscope 200 under software control. The controller 222 might be a separate computer system adapted to handle realtime operations or an application program executed by the processor 272. For this purpose, the source subsystem 102 includes a control interface 130 allowing for its control and monitoring by the controller 222 and in particular the X-ray source system 102. Similarly, the object stage subsystem 110 and the detector subsystem 118 include respective control interfaces 132, 134 for allowing for their control and monitoring by the computer 210 via the controller 222.

In an embodiment, to configure the microscopy system 200 to scan the object of interest 114 and to adjust other parameters such as the geometrical magnification, the scanning control application 252 adjusts the source-to-object distance 202 and the source-to-detector distance 204 by respective operation of the source stage 154 and detector stage 156 to achieve the desired scanning setup.

Specifically, the source stage 154 and detector stage 156 include respective motor encoder systems or other actuator systems that allow the computer 210 via the controller 222 to position the respective X-ray source subsystem 102 and the detector subsystem 118 to specified positions via the control interfaces 130, 134. Further, the source stage 154 and detector stage 156 signal the controller 222 of their actual positions.

In an embodiment, a scanning control application 252 then operates the object stage subsystem 110 to perform the CT scan via the controller 222 and the control interfaces 130, 132, 134. Typically, the object stage subsystem 110 will position the object 114 by rotating the object 114 about the Y-axis that is orthogonal to the optical axis of the X-ray beam 103, 105 by controlling the theta stage 152 and/or position the object of interest 114 in the x, y, z axes directions using x, y, z precision compound stage 150. The scanning control application 252 saves the scan 270 as metadata with projection data from the detector subsystem 118 along with the position of the X-ray source subsystem 102, the detector subsystem 118 and most importantly the positions of the x, y, z stages of the compound stage 150 and the theta stage 152. This information is preferably saved to the memory 224. In more detail, the scan data 270 include a record for each projection (Projection1, Projection2, .... ) generated by detector subsystem 118. Each of those records includes the spatially resolved image and further includes associated metadata of the stages' positions. Thus, Metadata1, Metadata2... includes the positions of the x, y, z stages of the compound stage 150 and the theta stage 152 associated with each Projection1, Projection2,....

In an embodiment, the scan data 270 will also further include the acquisition parameters such as X-ray source voltage settings that help to determine the X-ray energy spectrum and exposure time and number of frames on the X-ray source subsystem 102. Other settings such as the field of view of the X-ray beam 103 incident upon the object of interest 114, the number of X-ray projection images to create for the object of interest 114, and the detector 124-1, 124-2 selected as also stored in the scan data 270. Preferably, the acquisition parameters include X-ray source voltage, X-ray source filtration provided by filter wheel 160, camera exposure time, number of frames, and overall number of projections. In addition, the source-to-object distance 202 and the source-to-detector distance 204 are preferably stored.

In an embodiment, a spectral response estimator 250 determines how the polychromatic X-ray source subsystem 102, along with the system's filtering 160 and detector subsystem 118, affect the detected X-rays. During operation, the spectral response estimator 250 processes a combination of hardware configuration parameters (e.g., selected filter 160, filter thickness) and physical properties of the detector subsystem 118 (e.g., scintillator thickness, detector quantum efficiency). These inputs are then used to model or calculate a system "spectral sensitivity curve." The spectral response estimator 250 them outputs a spectral response data block 258 that is stored in memory 224. The data block 258 includes the calculated or tabulated energy-dependent weights for the X-ray photons as they pass through filters and interact with the detector subsystem 118. This spectral response data block 258 is stored in local memory 224 in the scan dataset 270.

In an embodiment, a simulation corrector 254 uses the spectral response data block 258 in conjunction with either user-supplied or automatically derived sample composition data to simulate how multiple thicknesses or material phases would be measured by the actual hardware. This module aggregates real or approximate sample characteristics-such as known mineral compositions, densities, or scanning geometry-and merges them with the spectral response data block 258 from the spectral response estimator 250. This process produces a simulated polychromatic attenuation data block 260, which captures polychromatic attenuation values for the range of sample conditions deemed most relevant. The simulation corrector 254 then fits these simulated polychromatic values to a target monochromatic attenuation curve, yielding a polynomial or higher-order function that corrects beam-hardening artifacts. This target monochromatic attenuation curve is a mapping function that is stored as a correction function data block 266. Notably, this means the simulated polychromatic attenuation data block 260 and the correction function data block 266 persist in some embodiments, so that, if needed, the system can reuse or adjust these mappings for future scans that share similar conditions.

In an embodiment, a reconstructor 256 applies the correction function 266 to real projection data Projection1, Projection2, ... acquired from the X-ray system 205. Prior to reconstruction, the reconstructor 256 receives the raw projections Projection1, Projection2, along with the correction function 266 from the simulation corrector 254. Using these pieces of information, it compensates each projection for polychromatic effects by remapping the polychromatic absorption data into an equivalent monochromatic or "linearized" data set. It then performs a standard tomographic reconstruction algorithm (such as Feldkamp-Davis-Kress), outputting a reconstructed volume data block 268, in which voxel intensities correspond more accurately to the true attenuation coefficients in the sample. This reconstructed volume 268 is stored or transmitted to a visualization or analysis interface, enabling subsequent steps such as quantitative material indexing or further image processing.

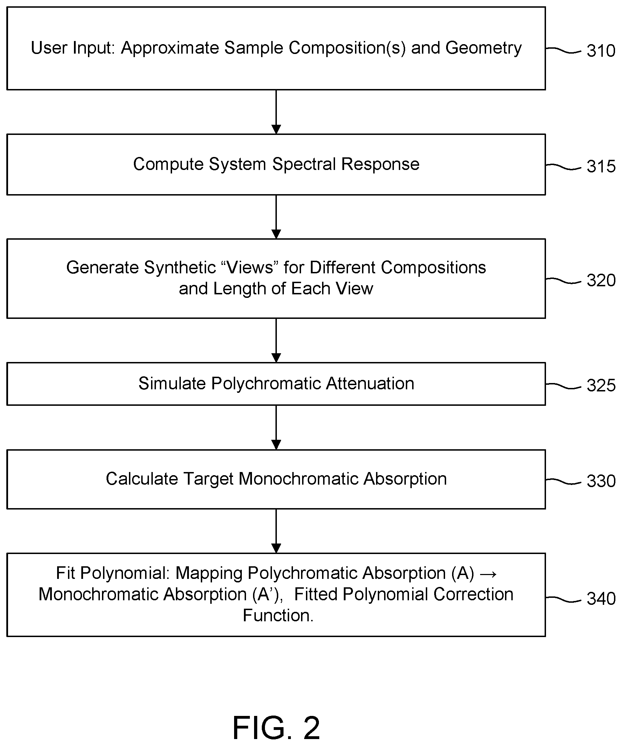

Fig. 2 is a flow diagram illustrating a polynomial correction method for addressing polychromatic beam-hardening artifacts and enabling the derivation of an effective monochromatic attenuation coefficient for X-ray imaging data performed by the computer system 210, according to an embodiment.

As depicted, the process begins with step 310 in which a user or operator provides an estimate of the sample's mineral composition (for example, 80% quartz and 20% pyrite) and geometric characteristics (such as a cylindrical rock core or a roughly spherical sample). These inputs serve as essential groundwork for the subsequent simulation steps. **In** other examples, the geometry is automatically obtained under control of the computer system 210 by performing a quick scan to resolve the geometry of and elements contained in the sample 114. Chemical assays are another option to obtain approximate compositions as field data or typical mineralogy references.

Next, in step 315, the spectral response estimator 250 executing on the computer subsystem 210 determines how the X-ray source spectrum, any filters employed, and the detector's conversion efficiency combine to yield the spectral response data block 258. This computation accounts for the particular source voltage, filter materials and thickness, scintillator characteristics (such as thickness and composition), and the probability that X-ray photons at various energies will produce a measurable signal.

The spectral response estimator 250 functions as a system simulator that simulates a range of views of varying sample thicknesses and compositions. Let us consider an accurate imaging operator G (corresponding to a spectral simulation of a view): ${A}_{s} = G \left(l, Z, s\right)$ [7]

Where 1 is the object thickness, Z effective atomic number and s system spectral response. Note that it is not required to simulate full projections (although there will be applications where this is desirable, as described below). The spectral response estimator 250 needs to know the system spectral response at the system conditions used during the acquisition of the data to be corrected. This system spectral response is the product of the effective X-ray spectrum (that is the source spectrum filtered by any filters used), the scintillator absorption likelihood function (what is the probability, at a given energy, that a photon will interact the scintillator) and the visible light production function (given a photon interacts, what is the visible light production, as a function of absorbed X-ray photon energy).

A range of techniques can be used to simulate each of these properties, but a simple approach would be to use some variety of Monte-Carlo simulation to simulate input spectra, then use tabulated X-ray attenuation coefficients for a (known) filter composition, density and thickness to modify this spectrum to give an effective input X-ray spectrum.

If scintillator thickness is known, the absorption likelihood function (as a function of energy e) is ${A}_{l} \left(e\right) = 1 - {e}^{- μ \left(e\right) t}$ [8] where *µ* are tabulated attenuation coefficients (for the given scintillator composition and density) and t is the scintillator thickness. Visible light production can be more complex to simulate, particularly for thin scintillators that use small pixels at the scintillator plane. In the simplest formulation a linear ramp can be used, where visible light production is linearly proportional to absorbed photon energy (e.g. 55ph/keV for CsI(Tl)). This can break down for thin scintillators and more complex models can be used, which consider X-ray fluorescence and energy loss within the scintillator.

A system spectral sensitivity can be considered to be a function *wₑ* (a function of energy e, expressed in the transmission domain) as the product of the source spectrum S, filter absorption, scintillator absorption and the visible light production function V_{prod} (itself a function of energy): ${w}_{e} = {Se}^{- {μ}_{filt} \left(e\right) {t}_{filt}} \left(1-{e}^{- {μ}_{scint} \left(e\right) {t}_{scint}}\right) {V}_{prod} \left(e\right)$ [9]

Once the system's spectral sensitivity is defined, step 320 creates a range of virtual X-ray paths through the sample. Here, the compute subsystem 210 either randomizes or systematically varies both the thickness of the path through the sample and the mix of constituent materials based on the sample composition data. The distribution of these synthetic paths reflects the approximate composition(s) and geometry specified in step 310. By generating a sufficiently comprehensive set of "views," the system ensures that an eventual correction function 266 produced by the simulation corrector 254 can handle the range of beam-hardening scenarios likely to appear in the real imaging data.

In fact, a population of different views are preferably simulated with a range of compositions and thicknesses. The compositions are sometimes randomly distributed given some (approximate) input from the user. For example, a mineral sample with approximately 80% Quartz (SiO₂) and 20% Pyrite (FeS₂) employs this information as an input. It would then create many different views with a range of compositions with the composition distribution peaked at the provided approximate compositions.

The distribution of lengths for each view in the population is preferably randomly assigned, with the probability distribution for the given sample given by the probability distribution of lengths for that sample geometry. This could be determined by forward projecting an exterior hull of the sample (determined by segmenting an initial tomography, or by visible light tomography, or by inspecting projections, or by selecting from a predetermined list of approximate sample geometries), or by fitting an analytical probability distribution to such a forward projection.

The following simulator for a view n with length *lₙ* and composition *cₙ* (determined from the before-mentioned statistical distributions) sums across energies e weighted by the transmission domain system spectral sensitivity function *wₑ*: ${A}_{s , n} = {\sum }_{e} - {μ}_{n , e} {l}_{n} {logw}_{e}$ [10]

For every view a corresponding monochromatic view of the same composition is specified at a given / chosen energy, *A_{s,n,e}.* ${A}_{s , n , e} = {μ}_{n , e} {l}_{n} \left[11\right]$ [11]

Using these synthetic views generated in step 320, step 325 calculates how the polychromatic beam (as characterized by the spectral response 258 in step 315) would be attenuated for each possible thickness and composition.

**In** this step, the computer subsystem 210 sums attenuation contributions over the relevant energy range, weighting them by the detector's probability of capturing and converting photons at each energy. The output is a series of polychromatic absorption values, each reflecting realistic beam-hardening effects.

**In** step 330, the computer subsystem 210 calculates the corresponding monochromatic absorption values at a chosen or "effective" energy. This simulates an idealized scenario where the beam has a single photon energy.

Thus, for every synthetic view, there is now a polychromatic absorption value (A) and a target monochromatic absorption value (A'). By assigning a uniform attenuation coefficient over the thickness, the system establishes the benchmark to which the real polychromatic data should be corrected.

A key insight is that this simulation pair correspond to the *A'* and *A* from equation [4], with *A_{s,n,e}* being the monochromatic view (*A'*) and *A*_{*s*,*n*} being the polychromatic view (*A*)*.* It has been previously discussed (equation 4, 5, 6) how polynomial functions can be used to simplify this mapping from A → A'.

With these paired data points in hand, in step 335, the simulation corrector 254 executing on the computer subsystem 210 determines the correction function 266, typically a polynomial or higher-order curve, that best transforms the set of polychromatic absorption values to the corresponding monochromatic values.

A correction function 266 is determined where the measured absorption values are not a non-linear function of object thickness.

This fitting step may employ standard techniques such as least-squares regression, but can be extended if higher accuracy is required for thicker samples or complex multi-mineral compositions.

In some embodiments, the polynomial coefficients are determined by systematically minimizing an error metric between simulated polychromatic absorption values and the corresponding monochromatic absorption values. This optimization can be achieved through various numerical optimization techniques, such as Powell's method, the Nelder-Mead simplex algorithm (also known as Amoeba), or limited-memory Broyden-Fletcher-Goldfarb-Shanno (L-BFGS) for nonlinear problems. Alternatively, and in one practical implementation, the polynomial fitting can be accomplished by transforming the optimization into a linear algebra problem and then directly solving this linear problem, such as by employing a Moore-Penrose pseudoinverse approach.

Finally, in step 340, the computer subsystem 210 stores or outputs the polynomial (e.g., *A'~µl = a + bA + cA*² *+ dA*³ *+ eA*⁴ + ··· + *nAⁿ*) or alternative correction function 266 that performs the best-fit correction. This correction function 266 is to be applied to actual projection data prior to tomographic reconstruction, ensuring that resulting voxel intensities correspond more directly to a physically meaningful attenuation coefficient. Once derived, the same correction function can be reused in subsequent scans by the compute subsystem 210 that employ similar source parameters, filter configurations, and sample compositions, streamlining the correction process for repeated or routine analyses.

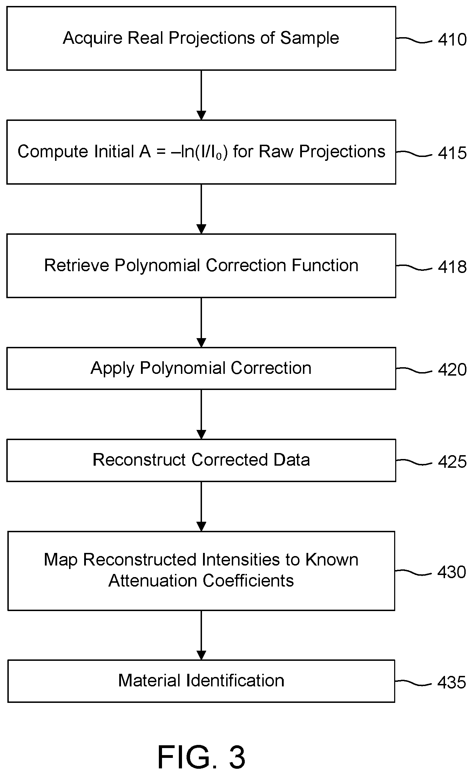

Fig. 3 is a flow diagram illustrating how the polynomial correction function 266 derived from the previous simulation-based workflow is applied by the computer subsystem 210 to real projection data, ultimately enabling material identification through accurate attenuation mapping.

In the initial step 410, a series of projection images of the physical sample using the laboratory-based polychromatic X-ray source subsystem 102 are collected. The sample 114 is rotated through a predefined set of angles by stage 152 to implement a scan. At each angle, the detector subsystem 118 captures a two-dimensional projection of the sample's internal structure. Because the X-ray beam 103/105 is polychromatic, these raw projections inherently contain beam-hardening artifacts that can distort the apparent attenuation values, particularly for thicker regions of the sample.

At step 415, the system computes a preliminary attenuation value for each pixel in the captured projections. This step follows the Beer-Lambert formulation commonly employed in X-ray imaging, wherein the logarithmic transform is used to linearize the relationship between material thickness and attenuation-at least under monochromatic assumptions:

For every view, consider what a corresponding monochromatic view of the same composition at a given / chosen energy, *A_{s,n,e}*: ${A}_{s , n , e} = {μ}_{n , e} {l}_{n} \left[11\right]$ [11]

Beam-hardening artifacts manifest as deviations from a single linear attenuation coefficient. The uncorrected absorption image at this stage thus captures only the primary transmission effect but does not yet account for energy-dependent changes in attenuation.

In the next step 418, the system accesses or retrieves the polynomial correction function 266 previously derived using synthetic simulation data. This polynomial was generated by comparing polychromatic absorption values with those expected under a chosen target monochromatic energy.

In some embodiments, this polynomial correction may have been stored in a local data structure or in a remote database. If the scanning parameters in the metadata (e.g., voltage, filter materials, detector characteristics) match those used during the polynomial generation phase, the same polynomial may be reused without modification. Alternatively, an updated polynomial function can be loaded if user inputs or system conditions have changed.

At step 420, the system applies the retrieved polynomial correction function 266 to the uncorrected absorption images. Each pixel's value (A) is transformed into a corrected (A') according to the fit that best compensates for energy-dependent variations in the polychromatic beam and sample's thickness for that pixels view. As a result, what emerges from this step is a set of "linearized" projection images whose attenuation coefficients are more consistent with a single, well-defined photon energy (monochromatic), thus greatly reducing the beam-hardening artifacts.

By performing this transformation prior to reconstruction, the approach ensures that all data fed into the subsequent tomographic algorithm exhibit a more uniform relationship between thickness and attenuation and elements along each pixel's view. In practice, the system might apply this polynomial in a pixel-wise manner, iterating over each pixel of each projection to output a corrected intensity array.

Having corrected the polychromatic artifacts, the system in step 425 now performs a standard tomographic reconstruction on these polynomial-corrected projections. A variety of reconstruction algorithms may be employed (e.g., Feldkamp-Davis-Kress, filtered back projection, iterative approaches), depending on user preferences and computational resources. Regardless of the chosen algorithm, the key benefit is that the input data now more reliably reflect a single attenuation coefficient per material, free from thickness-dependent beam-hardening effects.

As a result, the reconstructed volume should show significantly improved grayscale uniformity for homogeneous materials, as well as clearer contrasts between different materials with closely spaced atomic numbers. This improved clarity lays the groundwork for downstream analyses, such as mineral segmentation or porosity measurements).

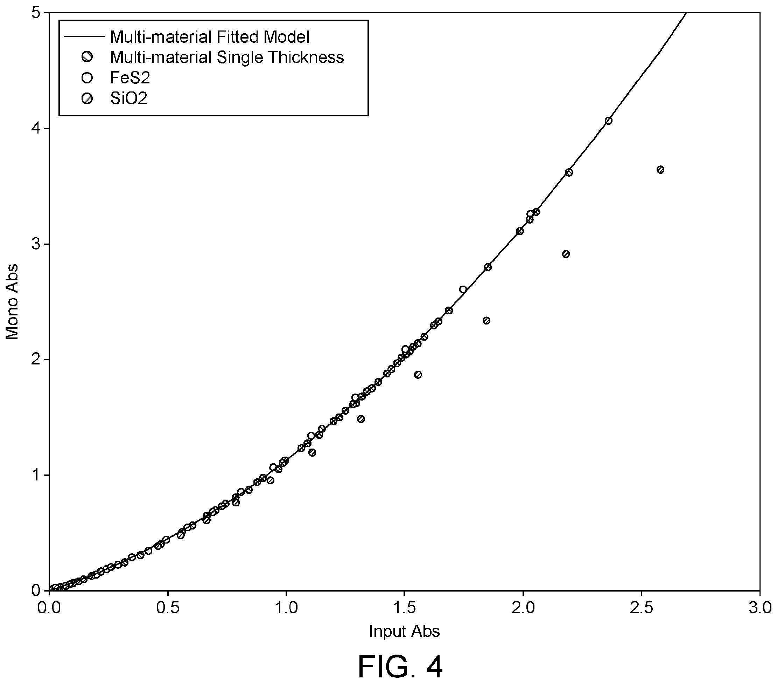

The modality outlined above allows for the use of prior knowledge (both about the system, in the determination of the system spectral sensitivity function *wₑ*, and about the sample, in the population of view compositions (determining distributions in *µₙ,ₑ* and *lₙ*) such that a higher order functions (higher order polynomials can be fit specific to the system conditions. Such simulation and fitting can be seen in Fig. 4 for the exemplary cases of SiO₂ and FeS₂.

The mapping of an input absorption (Input Abs - polychromatic, *A*_{*s*,*n*} in equation *A*_{*s*,*n*} = Σ*ₑ* -*µ_{n,e}lₙ* log *wₑ* [10] ) to a monochromatic absorption (Mono Abs - monochromatic, *A_{s,n,e}* = *µ_{n,e}lₙ* [11]). Populations of views of varying composition (FeS₂, SiO₂ and a multimaterial mix of the two) are shown as different dots, with the fitted higher order polynomial (*A'~µl = a + bA + cA*² *+ dA*³ *+ eA*⁴ + ··· + *nAⁿ* [5] ) for the multimaterial population shown as the line.

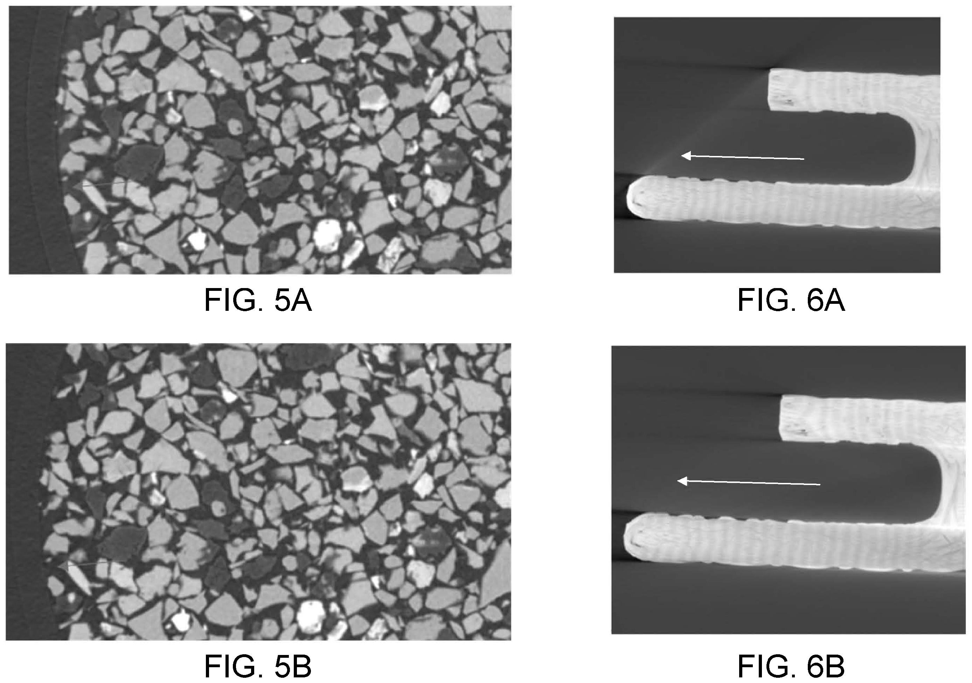

This can result in better corrections, with two application examples shown in Figs. 5A and 6A (showing simple beam hardening correction (*A' = A + aA*² *- a*(*cAbs*)² [6]), with manually user optimized *α.*) and 5B and 6B (showing the automated beam hardening correction, using high order polynomial (*A'~µl = a + bA + cA*² *+ dA*³ *+ eA*⁴ + ··· + *nAⁿ* [5] [5]) fitted to map simulated polynomial views (*A_{s,n}* = Σ*ₑ -µ_{n,e}lₙ* log *wₑ* [10]) to the same simulated monochromatic view. Note the reduced "ghosting" indicated by the arrows due to the achieved technical effect of the method.

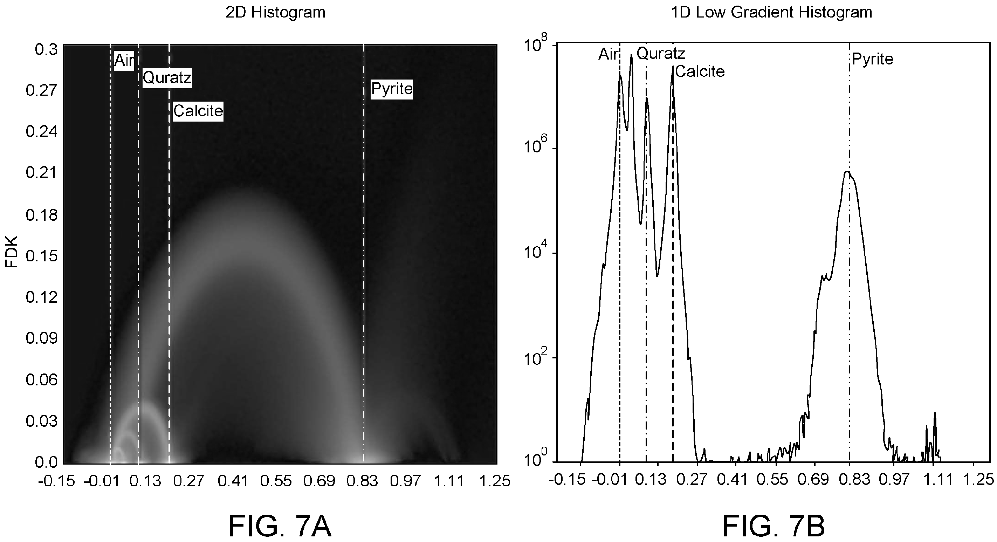

As the correction polynomials correct the data to a determined target energy, this can be used to index unknown materials in the reconstruction. This is done by comparing the attenuation coefficients for candidate material compositions and densities at the target energy (the given / chosen energy used in *A_{s,n,e}* = *µ_{n,e}lₙ* [11]) with the observed reconstructed intensity distributions in the data. The unknown material composition / density will correspond to the observed intensity, as shown in the Figs. 7A and 7B.

Correlation between peaks in data histogram with indexed materials reconstructed attenuation coefficient at a given target energy in a sample of known composition (a powder composed of quartz, calcite and pyrite). A 2D histogram is shown in Fig. 7A, plotting the combined histogram of both image intensity (X axis) and image gradient (Y axis). High brightness regions near the Y axis (low gradient regions) correspond to the center of large powder grains in this embodiment. A 1D low gradient histogram is shown in Fig. 7B.

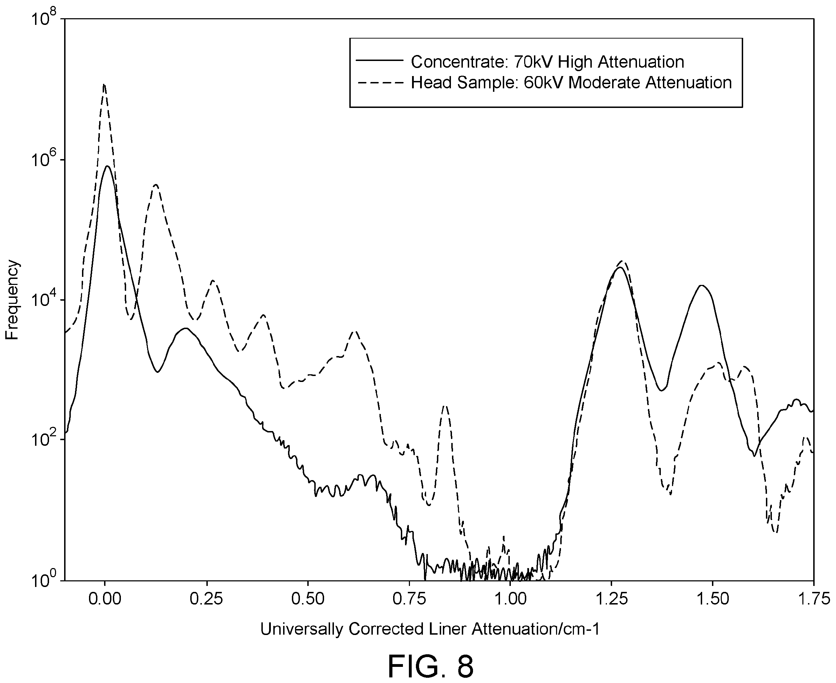

Another major advantage of this approach is that the correction it provides is theoretically much more universal than that of manually tuned heuristic models (e.g. *A' = A + aA*² *- a*(*cAbs*)² [6]), meaning that they are over a broader range of compositions, sample sizes and attenuation distributions. This is shown below in the embodiment of Fig. 8.

In the plot of frequency versus universally corrected linear attenuation, two samples with very different compositions reconstructing to the same absolute mineral intensities when using higher order polynomial correction functions.

It should be noted that for this approach to work the reconstruction algorithm used must be correctly scaled such that the intensity in each voxel corresponds to its effective local attenuation coefficient.

In summary, the approach of the present disclosure advantageously relies on an accurate assessment of various system parameters (e.g. *wₑ = Se^{-µfilt}*(*e*)*t^{filt}*(1 - *e^{-µscint}*(*e*)*t^{scint}*)*V_{prod}*(*e*) [9]) which can be challenging for real systems and associated with uncertainties, particularly under specific conditions (e.g. accurate system parameters may be available for low source voltages, but not for high, or vice-versa).

While this disclosure has been particularly shown and described with references to preferred embodiments thereof, it will be understood by those skilled in the art that various changes in form and details may be made therein without departing from the scope encompassed by the appended claims.

### List of reference signs

- 10: Coordinate system
- 102: X-ray source subsystem
- 103, 105: X-ray beam
- 107: Base
- 110: Object stage subsystem
- 112: Object holder
- 114: Sample
- 118: Detector subsystem
- 122: Turret
- 124: Detector
- 124-1: High-resolution detector
- 124-2: Lower resolution detector
- 130: X-ray source subsystem control interface
- 132: Object stage subsystem control interface
- 134: Detector subsystem control interface
- 150: Three-axis compound stage
- 152: Theta stage
- 154: Source stage
- 156: Detector stage
- 160: Filter wheel
- 200: Microscopy system
- 202: Source-to-object distance
- 204: Source-to-detector distance
- 205: X-ray microscope
- 210: Computer subsystem
- 220: Image processor
- 222: Controller
- 224: Memory
- 250: Spectral response estimator
- 252: Scanning control
- 254: Simulation corrector
- 256: Reconstructor
- 258: Response data block
- 260: Attenuation data block
- 262: Operating system
- 266: Correction function data block
- 268: Reconstructed volume data block
- 270: Scan
- 271: Dynamic memory
- 272: Processor
- 310: Method step: User Input: Approximate Sample Composition(s) and Geometry
- 315: Method step: Compute System Spectral Response
- 320: Method step: Generate Synthetic "Views"
- 325: Method step: Simulate Polychromatic Attenuation
- 330: Method step: Calculate Target Monochromatic Absorption
- 340: Method step: Fit Polynomial
- 410: Method step: Acquire Real Projections of Sample
- 415: Method step: Compute Initial A = -In(I/I₀) for Raw Projections
- 418: Method step: Retrieve Polynomial Correction Function
- 420: Method step: Apply Polynomial Correction
- 425: Method step: Reconstruct Corrected Data
- 430: Method step: Map Reconstructed Intensities to Known Attenuation Coefficients
- 435: Method step: Material Identification

## Claims

1. A method for correcting polychromatic X-ray projection data of an X-ray imaging system (200) , the method comprising:
acquiring projection data from a polychromatic X-ray beam (103, 105) passing through a sample (114);
determining a system spectral response (315) based on an X-ray source (102) spectrum, and a detector (124) response function and, optionally, filter (160) absorption parameters;
simulating (325) a plurality of polychromatic absorption values for different material thicknesses and/or compositions under the determined system spectral response;
computing (330) corresponding monochromatic absorption values at a target energy for a plurality of thicknesses and/or compositions;
fitting (340) a mapping function that relates the simulated polychromatic absorption values to the corresponding monochromatic absorption values, wherein said mapping function is a polynomial or other non-linear function;
applying the mapping function to an initial absorption value, A, to produce a corrected absorption value, A', that scales substantially linearly with respect to sample thickness for the target energy; and
reconstructing a volumetric dataset based on corrected absorption values to obtain attenuation coefficients.

2. The method of claim 1, wherein determining the system spectral response (315) further comprises performing a simulation to model at least one of:
(i) X-ray source (102) output as a function of energy;
(ii) filter (160) material attenuation; and
(iii) scintillator absorption,
wherein the system spectral response (315) is generated from an energy-dependent detection probability that is based on each of the above modelled aspects.

3. The method of any of claims 1 or 2, wherein fitting (340) the mapping function comprises performing a polynomial regression of at least second order, wherein coefficients of the polynomial are determined by minimizing an error metric between the simulated polychromatic absorption values and the corresponding monochromatic absorption values.

4. The method of any of claims 1 to 3, wherein simulating (325) the plurality of polychromatic absorption values comprises generating a set of sample thicknesses and material compositions in accordance with an estimated probability distribution of actual sample geometries.

5. The method of any of claims 1 to 4, wherein computing (330) the corresponding monochromatic absorption values further comprises referencing tabulated attenuation coefficients for each constituent material at the target energy, and summing their contributions over a defined path length through the sample (114).

6. The method of any of claims 1 to 5, wherein reconstructing the volumetric dataset further comprises performing a filtered back-projection or a Feldkamp-Davis-Kress, FDK, reconstruction algorithm on the corrected absorption values, wherein a resulting volumetric array includes voxel intensities corresponding substantially to material attenuation coefficients at the target energy.

7. The method of any of claims 1 to 6, further comprising storing the polynomial or other non-linear mapping function for use in subsequent scans conducted at substantially similar operating parameters of X-ray source (102) voltage, filter (160) configuration, and detector (118) settings.

8. The method of any of claims 1 to 7, further comprising updating the mapping function in response to at least one of the system spectral response parameters changing, wherein the updated mapping function is derived by re-running the simulations under revised operating conditions and refitting the polynomial or other non-linear function to the newly generated polychromatic absorption values.

9. The method of any of claims 1 to 4, wherein determining the system spectral response (315) is performed by a spectral response estimator (250) that outputs the results of the determination to a spectral response data block (258) stored in a memory (224) of the X-ray imaging system (200).

10. The method of claim 9, insofar as dependent from claim 4, wherein simulating (325) the plurality of polychromatic absorption values further comprises aggregating real or approximate sample characteristics and merging them with the spectral response data block (258) from the spectral response estimator (250).

11. The method of claim 10 further comprising producing a simulated polychromatic attenuation data block (260), which captures polychromatic attenuation values for the relevant range of sample conditions.

12. The method of claim 1, further comprising storing the mapping function as a correction function data block (266) in a memory (224) for future reuse or adjustment.

13. The method of claim 12, further comprising applying the correction function data block (266) to real projection data by a reconstructor (256), wherein polychromatic absorption data are remapped into an equivalent monochromatic or linearized data set.

14. The method of claim 13, further comprising performing a tomographic reconstruction algorithm and outputting a reconstructed volume data block 268, in which voxel intensities correspond to true attenuation coefficients in the sample (114).

15. An X-ray imaging system (200) for correcting polychromatic X-ray projection data to enable quantitative volume reconstruction of a sample (114), the system (200) comprising:
a polychromatic X-ray source (102) configured to emit a polychromatic X-ray beam (103, 105);
a detector (118) arranged to receive X-rays (105) transmitted through the sample (114) and to generate projection data corresponding to measured intensities; and
a processor (272) configured to execute the method of any of claims 1 to 14.
